# EUROPÄISCHE PATENTSCHRIFT

(11) **EP 3 153 829 B1**
(45) Veröffentlichungstag und Bekanntmachung des Hinweises auf die Patenterteilung: **02.12.2020**
(21) Anmeldenummer: 15188826.0
(22) Anmeldetag: 07.10.2015
(51) Int. Cl.: G01F 23/26

(54) **VERFAHREN UND VORRICHTUNG ZUR GRENZSTANDBESTIMMUNG**
METHOD AND DEVICE FOR LIMIT STATE DETERMINATION
PROCEDE ET DISPOSITIF DE DETERMINATION DE NIVEAU LIMITE

(43) Veröffentlichungstag der Anmeldung: 12.04.2017
(73) Patentinhaber: VEGA Grieshaber KG, 77709 Wolfach (DE)
(72) Erfinder: Grießbaum, Karl, 77796 Mühlenbach (DE); Weinzierle, Christian, 77709 Wolfach (DE)
(74) Vertreter: Patentanwälte Bauer Vorberg Kayser

(56) Entgegenhaltungen:
- WO-A1-2013/110764
- DE-A1- 10 250 523
- DE-A1-102011 003 158

## Beschreibung

Die vorliegende Erfindung betrifft ein Verfahren sowie eine Vorrichtung zur Grenzstandbestimmung bei einer Mehrzahl unterschiedlicher Medien.

Füllstandmessgeräte und Verfahren zur Bestimmung des Füllstands eines Füll- oder Schüttgutes in einem Behälter sind aus dem Stand der Technik bekannt und werden beispielsweise eingesetzt um zu erfassen, ob sich ein Füllstand oberhalb oder unterhalb eines vordefinierten Befüllungszustands befindet. Solche Geräte werden oft auch als Füllstandgrenzschalter bezeichnet. Der Druckschrift DE 10 2011 003 158 A1 beschreibt eine Vorrichtung und ein Verfahren zur kapazitiven Füllstandmessung nach dem Stand der Technik.

Füllstandgrenzschalter können auf ganz unterschiedlichen physikalischen Prinzipien beruhen. Eines dieser Prinzipien ist die Auswertung einer Kapazität, welche sich zwischen einer Messelektrode und einer Referenzelektrode bildet, wobei das Füllgut bei Befüllung des Behälters einen Raum zwischen Referenz- und Messelektrode ausfüllt und dabei die durch diese gebildete Kapazität verändert. Zur Messung der füllstandabhängigen Kapazität gibt es wiederum mehrere unterschiedliche Verfahren. Ein Verfahren zur Bestimmung der Kapazität ist die Bildung eines elektrischen Resonanzkreises unter Einbeziehung der interessierenden Kapazität. Die Resonanzfrequenz des Resonanzkreises kennzeichnet dabei die Größe der zu messenden Kapazität.

Der Resonanzkreis kann beispielsweise als Serienschwingkreis mit Serienschaltung einer Induktivität mit der Kapazität ausgeführt sein.

Aus dem elektrischen Verhalten des Schwingkreises, vorzugsweise in einem Frequenzbereich, der die Resonanzfrequenz enthält, lassen sich Eigenschaften des durch die Referenz- und Messelektrode gebildeten Kondensators bestimmen. Diese Eigenschaften sind in erster Linie dessen Kapazität und elektrische Leitfähigkeit. Diese wiederum sind weitgehend bestimmt durch eine Permittivität und Leitfähigkeit des Mediums zwischen den Elektroden.

Die Anregung eines elektrischen Resonanzkreises bedingt die Einspeisung eines Wechselspannungssignals mit Hilfe eines Wechselspannungsgenerators. Durch Veränderung der Frequenz des eingespeisten Signals lässt sich das Verhalten des Schwingkreises über einen bestimmten Frequenzbereich bestimmen. Dazu wird das Verhalten der Wechselspannung in Bezug auf Amplitude und gegebenenfalls auch Phase bei Einspeisung in den Schwingkreis analysiert.

Um eine zuverlässige Leer-/Voll-Detektion für unterschiedliche Medien, insbesondere Medien unterschiedlicher Permittivität, Leitfähigkeit und Viskosität zu gewährleisten ist es im Stand der Technik notwendig, für jedes Medium vor Ort eine Kalibrierung des Sensors durch eine Testmessung, einen sogenannten Voll-/Leer-Abgleich durchzuführen. Der Grenzstandschalter ist nach diesem Abgleich für das gemessene Medium kalibriert, kann aber nicht für andere Medien verwendet werden. Dieses Vorgehen wird als nachteilig und aufwendig empfunden.

Aufgrund von Anhaftungen an der Messsonde, die bei Medien hoher Viskosität durchaus häufig vorkommen können, können außerdem Messergebnisse deutlich verfälscht werden und es dazu zu Fehldetektionen kommen.

Bei dem im Stand der Technik üblichen Verfahren wird typischer Weise die Schwingkreis-Resonanzfrequenz bestimmt und hinsichtlich derer eine Grenzfrequenz bzw. eine Grenzfrequenzänderung bei der Kalibrierung vorgegeben, bei deren Überschreiten auf eine Bedeckung des Grenzstandschalters mit Füllgut geschlossen und damit das Erreichen dessen Grenzstandes detektiert wird. Die Grenzfrequenz kann aber auch durch entsprechende Anhaftungen überschritten werden.

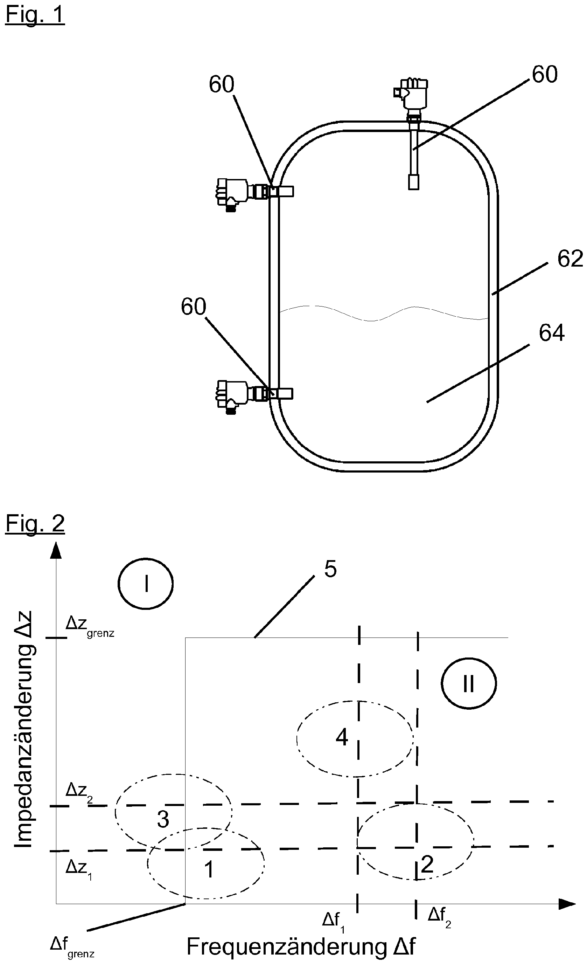

In Figur 1 ist die Anordnung von drei Grenzstandschaltern 60 in einem Tank 62 gezeigt. Die Grenzstandschalter 60 sind auf unterschiedlichen Füllhöhen in dem Tank derart angeordnet, dass bei Überschreiten der jeweiligen Füllhöhe ein sensorischer Bereich des Grenzstandschalters 60 mit Füllgut 64 bedeckt wird und dadurch eine entsprechende Frequenzänderung der Resonanzfrequenz des Schwingkreises eintritt. Auf diese Weise sind die unterschiedlichen Füllhöhen detektierbar.

In Figur 2 sind Bereiche von Frequenzänderungen Δf der Resonanzfrequenz des Schwingkreises eines Grenzstandschalters 60 für Füllgut niedriger Permittivität (Bereich 1), Füllgut hoher Permittivität (Bereich 2) sowie Bereiche für die Frequenzänderung Δf bei Füllgutanhaftungen an dem sensorischen Bereich, also den Elektroden, oder allgemeiner ausgedrückt an der Messsonde des Grenzstandsensors 60 bei unterschiedlichen Füllgütern hoher Viskosität (Bereich 3 und Bereich 4) dargestellt. Die Ordinate des dargestellten Diagramms zeigt eine Impedanzänderung Δz. Wie aus Figur 2 deutlich ersichtlich ist, können bei einer Betrachtung der Frequenzänderung Δf die Bereiche 2 und 4 zwischen einer ersten Grenzfrequenz Δf1 und einer zweiten Grenzfrequenz Δf2 nicht unterschieden werden. Bei einer Betrachtung der Frequenzänderung Δf würde damit bei einer Anhaftung des Füllguts ein Voll-Zustand detektiert, obwohl an dem Grenzstandschalter 60 lediglich Anhaftungen des Füllgutes vorhanden sind.

Aus Figur 2 ist außerdem ersichtlich, dass ein füllgutabhängiger Einzelabgleich stattfinden muss, da beispielsweise auch eine Bedeckung mit einem Füllgut niedriger Permittivität (Bereich 1) von einer Anhaftung eines Füllguts hoher Viskosität (Bereich 3) durch eine Betrachtung der Frequenzänderung Δf nicht hinreichend unterschieden werden kann. Ein universeller Einsatz solcher Grenzstandschalter 60 ab Werk ist damit nicht möglich.

Es ist die Aufgabe der vorliegenden Erfindung ein Verfahren zu Grenzstandbestimmung sowie einen Grenzstandschalter anzugeben, der ab Werk universell einsetzbar ist und insbesondere keine aufwendige Kalibriermessung vor Ort benötigt.

Diese Aufgabe wird durch ein Verfahren mit dem Merkmal des Patentanspruchs 1 sowie einen Grenzstandschalter mit dem Merkmal des Patentanspruchs 5 gelöst.

Bei einem erfindungsgemäßen Verfahren zur Grenzstandbestimmung bei einer Mehrzahl unterschiedlicher Medien mit einem Grenzstandschalter mit einem elektrischen Schwingkreis zur Auswertung einer kapazitiven Messsonde des Grenzstandschalters werden gleichzeitig wenigstens ein Frequenzkennwert und/oder dessen Änderung und ein weiterer Kennwert des Schwingkreises und/oder dessen Änderung ermittelt aus zumindest einer der Kenngrößen einer Wechselspannungsamplitude, einem Dämpfungsgrad, einer Impedanz, einer Admittanz und einer Reflexionsdämpfung ausgewertet.

Durch eine Auswertung von wenigstens zwei Kennwerten des Schwingkreises oder deren Änderung wird von einer strikt eindimensionalen Betrachtungsweise, was der Auswertung der Frequenzänderung entspricht, übergegangen auf eine Auswertung in einem durch die wenigstens zwei Kennwerte aufgespannten Koordinatenraum, d.h. es wird eine wenigstens zweidimensionale Auswertung in einer von zwei Kennwerten aufspannten Ebene oder ggf. sogar eine Auswertung in einem durch mehrere Kennwerte aufgespannten Raum durchgeführt.

Dadurch, dass eine Bedeckung der Messsonde mit dem Füllgut und Anhaftungen an der Messsonde sich unterschiedlich auf die verschiedenen Kennwerte auswirken, kann eine eindeutige Unterscheidung von Voll- und Leer-Zuständen und Anhaftungen erfolgen und es können Fehldetektionen weitestgehend ausgeschlossen werden. Der Erfindung liegt dabei die Erkenntnis zu Grunde, dass sich aus der gemessenen Wechselspannung am Schwingkreis die frequenzabhängige Impedanz oder Admittanz des Schwingkreises ableiten lässt. Impedanz und Admittanz sind dabei komplexe Größen, die sich aus Realteil und Imaginärteil zusammensetzen. Statt aus der gemessenen Wechselspannung eine komplexe Impedanz oder Admittanz zu bestimmen genügt es meist auch, nur deren Realteil oder deren Betrag zu ermitteln. Eine weitere Größe, die aus der gemessenen Wechselspannung ableitbar ist, ist die sogenannte Dämpfung des Schwingkreises. Sie hängt unmittelbar mit dem Realteil der Schwingkreisimpedanz zusammen.

In der Hochfrequenztechnik gibt es eine weitere Methode zur Bestimmung des Schwingkreisverhaltens, welches sich etwas von der eben beschriebenen Messung der angelegten Wechselspannung unterscheidet. Dabei wird über eine Leitung mit einer definierten Impedanz eine Wechselspannung zum Schwingkreis geleitet. Da der Schwingkreis über der Frequenz betrachtet seine Impedanz ändert ergibt sich zwischen fixer Leitungsimpedanz und variabler Schwingkreisimpedanz ein Impedanzsprung. An diesem wird ein Teil der Wechselspannung reflektiert. Der reflektierte Anteil kann gemessen und ins Verhältnis zum eingespeisten Anteil der Wechselspannung gesetzt werden. Auf diese Weise lässt sich eine sogenannte Reflexionsdämpfung des Schwingkreises bestimmen.

Alle eben genannten Messgrößen und daraus abgeleiteten Kenngrößen wie Wechselspannungsamplitude, Impedanz, Admittanz, Schwingkreisdämpfung und Reflexionsdämpfung sind grundsätzlich dazu geeignet, Rückschlüsse auf das Verhalten des Schwingkreises und damit auf die Eigenschaften des Messkondensators sowie des zu bestimmenden Mediums zu ziehen. Wenn in der folgenden Beschreibung die Rede von einer dieser Kenngrößen ist, so ist dies immer beispielhaft und stellvertretend für alle genannten zu verstehen.

Alle diese Kenngrößen des elektrischen Schwingkreises des zugrunde gelegten Grenzstandsensors ergeben über der Frequenz betrachtet einen vom Befüllungszustand und Befüllungsmedium abhängigen charakteristischen Verlauf. Besonders interessant für die Grenzstandauswertung ist die Resonanzfrequenz des Schwingkreises, die immer genau auf oder sehr nahe bei einem Extremwert jeder Kennlinie liegt. Ob dieser Extremwert ein Minimum oder Maximum der Kennlinie ist, hängt von der jeweiligen Kenngröße ab. Es ist deshalb vorteilhaft, den charakteristischen Verlauf einer jeweiligen Kenngröße über der Frequenz hinsichtlich gewisser mathematischer Eigenschaften zu analysieren. Besonders hilfreich ist wie bereits festgestellt die Bestimmung von Extrempunkten. Weitere geeignete geometrische Eigenschaften des untersuchten Kurvenverlaufs können beispielsweise Wendepunkte oder Symmetriepunkte oder abgeleitete Größen wie maximale Steigung und Abstand zwischen Minimum und Maximum sein. Aus der analysierten Eigenschaft des Kurvenverlaufs der entsprechenden Kenngröße ergibt sich mindestens ein die Frequenz betreffender Kennwert und mindestens ein weiterer Kennwert. Als Beispiel sei hier ein Frequenzwert eines Minimums der Impedanzkurve sowie der Impedanzwert im Minimum der Kurve genannt.

Vorteilhafterweise erfolgt die Auswertung durch Ermitteln der Kennwerte und Vergleichen der ermittelten Kennwerte mit herstellerseitig vorgegebenen Grenzwerten in einem wenigstens zweidimensionalen Kennwertraum, wobei eine Bedeckung der Messsonde festgestellt wird, wenn die ermittelten Kennwerte auf einer Seite einer durch die vorgegebenen Grenzwerte definierten Kennlinie liegen und keine Bedeckung festgestellt wird, wenn die ermittelten Kennwerte auf der anderen Seite der Kennlinie liegen.

In einem höher dimensionalen Raum gilt entsprechendes, wobei anstelle einer durch eine Kennlinie definierten Grenze eine entsprechende Ebene anzunehmen ist.

Idealerweise werden als Kennwerte wenigstens die Frequenz und die Impedanz eines Extremwerts des Kurvenverlaufs des Schwingkreises bzw. deren Änderung ausgewertet.

Da die Bedeckung des Grenzstandschalters mit Medien hoher Viskosität und Anhaftungen solcher Medien unterschiedliche Auswirkungen auf die Frequenz bzw. auf die Frequenzänderung und die Impedanz bzw. die Impedanzänderung des Sensors bzw. des Schwingkreises haben ist es auf diese Weise möglich, eine eindeutige Auswertung hinsichtlich einer Voll-Leer-Detektion durchzuführen und Fehldetektionen zu vermeiden. Es ist dabei vorteilhaft, wenn für die Auswertung herstellerseitig frequenzabhängige Impedanzwerte hinterlegt werden, die als Grenzwerte verwendet werden.

Vorzugsweise werden die Grenzwerte für eine Mehrzahl von Medien unterschiedlicher Permittivität, Leitfähigkeit und Viskosität herstellerseitig, vorzugsweise sensormodell bezogen, empirisch ermittelt und in dem Grenzstandschalter gespeichert. Durch die Hinterlegung einer Vielzahl von Grenzwerten für unterschiedliche Medien wird es durch das vorliegende Verfahren ermöglicht, einen Grenzstandschalter mit einem entsprechend implementierten Verfahren bzw. das Verfahren selbst ohne aufwendige Kalibriermessungen unmittelbar für eine Vielzahl unterschiedlicher Medien zu verwenden.

Vorzugsweise werden die Grenzwerte als Funktion in geschlossener Form vorzugsweise als nicht lineare Funktionen gespeichert bzw. hinterlegt. Eine solche Funktion kann beispielsweise als höhergradiges Polynom hinterlegt werden oder es kann alternativ eine Hinterlegung in Form einer Wertetabelle erfolgen, wobei Zwischenwerte durch eine Interpolation bestimmt werden. Eine solche Interpolation kann bei hinreichender Dichte der Stützstellen zwischen zwei Stützstellen beispielweise linear erfolgen oder es kann eine Interpolation durch ein höhergradiges Polynom erfolgen.

Um eine optimale Auswertung zu gewährleisten sollten die Grenzwerte für eine Mehrzahl, wenigstens 4 Medien, bevorzugt wenigstens 10 Medien, unterschiedlicher Viskosität oder Permittivität oder Leitfähigkeit ermittelt werden.

Ein erfindungsgemäßer Grenzstandschalter mit einem Schwingkreis zur Auswertung einer kapazitiven Messsonde des Grenzstandschalters ist gekennzeichnet durch eine Auswertungseinrichtung zur gleichzeitigen Auswertung von wenigstens zwei Kennwerten des Schwingkreises ausgewählt aus zumindest einer Frequenz, einem Dämpfungsgrad, einer Impedanz und einer Reflexionsdämpfung und/oder einer Änderung der vorgenannten Kennwerte.

Der Schwingkreis ist ferner derart ausgelegt, dass er mit einer Resonanzfrequenz von wenigstens 1 MHz, weiter bevorzugt wenigstens 10 MHz, weiter bevorzugt wenigstens 100 MHz schwingt.

Die Auswertungseinrichtung kann bevorzugt derart ausgestaltet sein, dass eine Grenzstandbestimmung durch Ermitteln der Kennwerte und Vergleichen mit herstellerseitig vorgegebenen Grenzwerten in einem wenigstens zweidimensionalen Kennwerteraum erfolgt, wobei eine Bedeckung der Messsonde festgestellt wird, wenn die ermittelten Kennwerte auf einer Seite einer durch die vorgegebenen Grenzwerte definierten Kennlinie liegen und keine Bedeckung festgestellt wird, wenn die ermittelten Kennwerte auf der anderen Seite der Kennlinie liegen.

Die Kennlinie repräsentiert dabei insbesondere die von der Resonanzfrequenz abhängige Resonanz-Schwingkreisimpedanz.

Die Auswertungseinrichtung kann bevorzugt derart ausgestaltet sein, dass wenigstens die Frequenz und die Impedanz des Schwingkreises ausgewertet werden.

Vorzugsweise weist der Grenzstandschalter wenigstens einen Speicher auf, in dem Grenzwerte als Funktion in geschlossener Form oder als Wertetabelle gespeichert sind.

Die vorliegende Erfindung wird nachfolgend unter Bezugnahme auf die beigefügten Figuren eingehend erläutert.

Es zeigen:
- Figur 1: eine schematische Darstellung der Einsatzmöglichkeiten von Grenzstandschaltern in einem Tank,
- Figur 2: eine Auswertung gemäß dem Stand der Technik,
- Figur 3: eine erfindungsgemäße Auswertung und
- Figur 4: beispielhafte Messkurven für Frequenz und Impedanz für Ketchup als Medium.

Figur 1 zeigt beispielhaft die Einsatzmöglichkeiten von Grenzstandschaltern 60 in einem mit einem Medium 64 gefüllten Tank 62. Die Grenzstandschalter 60 sind auf unterschiedlichen Füllhöhen beispielsweise in einer Seitenwandung oder von einer Oberseite her in den Tank 62 eingeführt, so dass Messsonden der Grenzstandschalter 60 bei Erreichen eines zu überwachenden Füllstands mit dem Füllmedium 64 bedeckt werden.

Die Messsonde der Grenzstandschalter 60 ist zur Auswertung in einem Schwingkreis angeordnet, der im Stand der Technik hinsichtlich einer Frequenzänderung Δf ausgewertet wird. Wird die Messsonde des Grenzstandschalters 60 mit einem Füllmedium bedeckt so ändert sich die Resonanzfrequenz f von einer sogenannten Leerfrequenz hin zu einer geänderten Frequenz. Die Frequenzänderung Δf liegt wie in Figur 2 dargestellt bei Medien mit niedriger Permittivität beispielsweise in einem Bereich 1 und bei Medien mit hoher Permittivität beispielsweise in einem Bereich 2. Als Medien niedriger Permittivität werden vorliegend beispielsweise Spinesso-Öl, Sägemehl, Kunststoffgranulat und Sand oder allgemeiner Medien mit einer Permittivitätszahl von 1 bis 3 verstanden. Als Medien hoher Permittivität werden beispielsweise Joghurt, Ketchup, Glycerin, Mayonnaise und Honig oder allgemeiner Medien mit einer Permittivitätszahl über 20 verstanden.

Durch Anhaftungen von Medien hoher Viskosität werden ebenfalls Frequenzänderungen verursacht. In Figur 2 sind solche durch Anhaftungen verursachte Frequenzänderungen einerseits als Bereich 3, beispielsweise für Medien geringerer Leitfähigkeit wie Glycerin oder Honig und als Bereich 4 beispielsweise für Medien höherer Leitfähigkeit wie Joghurt, Ketchup oder Mayonnaise dargestellt. Wie aus Figur 2 ersichtlich ist können durch eine Auswertung des Schwingkreises hinsichtlich einer Frequenzänderung Δf die Bereiche 2 und 4 in einem Bereich zwischen einer ersten Grenzfrequenz Δf1 und einer zweiten Grenzfrequenz Δf2, in dem die Bereiche 2 und 4 auf der Frequenzachse überlappen nicht unterschieden werden, so dass in diesem Bereich keine Aussage darüber möglich ist, ob eine Frequenzänderung aufgrund einer Anhaftung oder aufgrund einer Bedeckung des Grenzstandschalters 60 hervorgerufen wird. Im Stand der Technik ist es daher üblich, in einer Testmessung eine Frequenz für den bedeckten Zustand und eine Frequenz für den Leerzustand zu ermitteln und einen dazwischenliegenden Frequenzwert, beispielsweise einen Mittelwert, als Grenzfrequenz für einen Übergang von einem Leer- zu einem Voll-Zustand festzulegen. Wie aus der vorliegenden Darstellung ersichtlich ist, führt dies jedoch dazu, dass ein Teil des Bereiches 3 sowie der komplette Bereich 4 oberhalb der Grenzfrequenz liegen und damit als Voll-Zustand detektiert würden. Zusätzlich kann eine Auswertung des Schwingkreises hinsichtlich seiner Impedanz z bzw. hinsichtlich einer Impedanzänderung Δz erfolgen. Hierzu kann eine Grenzimpedanz Δz_{grenz} definiert werden, unterhalb derer ein Vollzustand detektiert wird. Auf diese Weise lässt sich durch eine Kalibriermessung eine Fehldetektion weitgehend ausschließen. Nachteilig an diesem Vorgehen ist jedoch, dass die so ermittelten Grenzwerte Δf_{grenz}, Δz_{grenz} nur für ein bestimmtes Medium Gültigkeit haben und der Grenzschalter daher nicht universell einsetzbar ist.

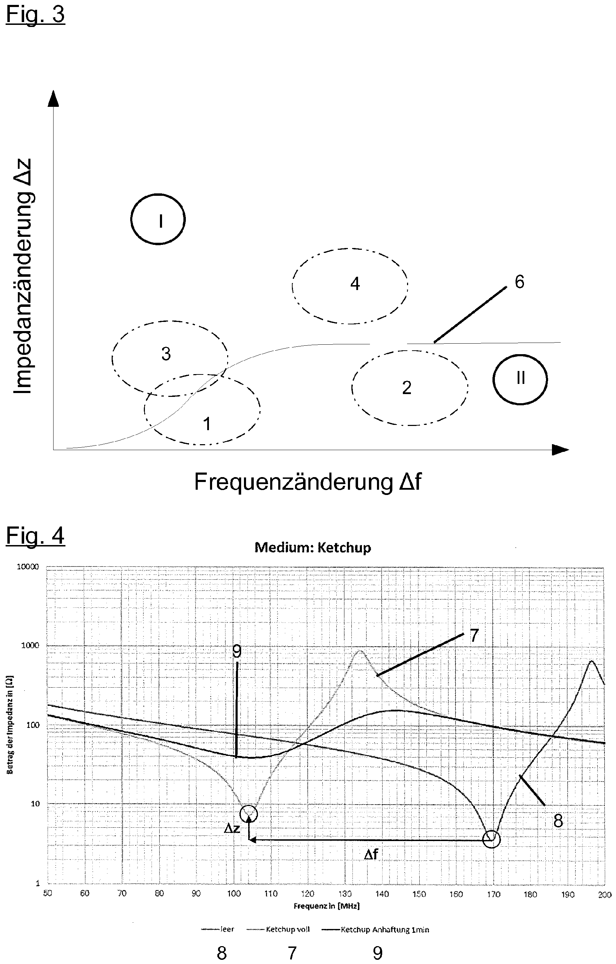

Hier setzt die vorliegende Erfindung mit der in Figur 3 dargestellten intelligenten Auswertung an.

Durch die in Figur 3 dargestellte Messkurve 6, die eine frequenzabhängige Impedanzänderung zeigt ist es möglich, einen Grenzstandschalter 60 zur Verfügung zu stellen, der ab Werk für eine Vielzahl von Medien vorkalibriert und damit sofort einsatzfähig ist wobei nur für bestimmte Spezialfälle eine Kalibriermessung notwendig ist.

Die Messkurve 6 ist herstellerseitig empirisch ermittelt und entweder als Funktion in geschlossener Form oder in einer Wertetabelle mit einer Vielzahl von Stützstellen in einem Speicher des Grenzstandschalters 60 hinterlegt. Beispielsweise können so die Bereiche 2 und 4, die einerseits durch eine Bedeckung des Grenzstandschalters 60 mit Füllmedium und andererseits durch Anhaftungen eines Füllmediums hervorgerufen werden eindeutig unterschieden werden.

In Figur 4 ist der vorliegende Sachverhalt für ein konkretes Medium nämlich Ketchup nochmals dargestellt. In dem Diagramm der Figur 4 ist abhängig von der Frequenz in MHz der Betrag der Impedanz in Ω aufgetragen, wobei die Messkurve 7 einen mit Füllmedium bedeckten Zustand des Sensors, also den Voll-Zustand, Kennlinie 8 den Leer-Zustand und Kennlinie 9 einen Zustand mit Anhaftungen an dem Grenzstandschalter 60 zeigt. Figur 4 ist dabei zu entnehmen, dass das typischerweise für die Auswertung herangezogene Minimum der dargestellten Kennlinien für den Voll-Zustand sowie den Zustand mit Anhaftungen bei annähernd der gleichen Frequenz, vorliegend in einem Bereich zwischen 100 und 110 MHz liegt. Eine Unterscheidung dieser beiden Zustände wäre damit bei einer reinen Frequenzbetrachtung nicht möglich. Der Figur ist aber ferner zu entnehmen, dass eine Impedanz des Schwingkreises im Bedeckt-Zustand bei etwa 8Ω und bei Anhaftungen etwa 40Ω liegt, so dass hier eine deutliche Unterscheidung aufgrund der Impedanzänderung Δz möglich ist.

Die vorliegende Erfindung ist nicht auf die gleichzeitige Auswertung von Frequenz und Impedanz beschränkt, sondern kann mit verschiedenen anderen Kennwerte erfolgen und/oder um weitere Kennwerte ergänzt und damit in ihrer Aussagekraft weiter verbessert werden.

### Bezugszeichenliste

- 1: Füllgut niedrige Permittivität
- 2: Füllgut hohe Permittivität
- 3: Füllgutanhaftungen niedriger Leitfähigkeit
- 4: Füllgutanhaftungen höherer Leitfähigkeit

- 60: Grenzstandschalter
- 62: Tank
- 64: Füllgut

- I: leer - Detektion
- II: voll - Detektion

- Δf1: erste Grenzfrequenz
- Δf2: zweite Grenzfrequenz
- Δz1: erste Grenzimpedanz
- Δz2: zweite Grenzimpedanz

- f: Frequenz
- z: Impedanz
- D: Dämpfungsgrad

- Δf_{grenz}: Grenzfrequenzänderung
- Δz_{grenz}: Grenzimpedanzänderung

## Patentansprüche

1. Verfahren zur Grenzstandbestimmung bei einer Mehrzahl unterschiedlicher Medien mit einem Grenzstandschalter (60) mit einem elektrischen Schwingkreis zur Auswertung einer kapazitiven Messsonde des Grenzstandschalters (60), wobei wenigstens ein Frequenzkennwert des Schwingkreises und/oder dessen Änderung sowie wenigstens ein weiterer Kennwert ermittelt aus zumindest einer der Kenngrößen Wechselspannungsamplitude, Dämpfungsgrad (D), Impedanz (z), Admittanz und Reflexionsdämpfung gleichzeitig ausgewertet werden, wobei die Auswertung durch Ermitteln der Kennwerte und Vergleichen der ermittelten Kennwerte mit herstellerseitig vorgegebenen Grenzwerten in einem wenigstens zweidimensionalen Kennwerteraum erfolgt, wobei eine Bedeckung der Messsonde festgestellt wird, wenn die ermittelten Kennwerte auf einer Seite einer durch die vorgegebenen Grenzwerte definierten Kennlinie liegen und keine Bedeckung festgestellt wird, wenn die ermittelten Kennwerte auf der anderen Seite der Kennlinie liegen,
**dadurch gekennzeichnet, dass** die Grenzwerte als Funktion in geschlossener Form, vorzugsweise als nicht lineare Funktion, oder in Form einer Wertetabelle hinterlegt werden und Zwischenwerte durch Interpolation bestimmt werden.

2. Verfahren gemäß Anspruch 1,
**dadurch gekennzeichnet, dass** als Kennwerte die Frequenzänderung (Δf) und die vorzugsweise frequenzabhängige Impedanzänderung (Δz) des Schwingkreises ausgewertet werden.

3. Verfahren gemäß einem der vorhergehenden Ansprüche,
d**adurch gekennzeichnet**, dass die Grenzwerte für eine Mehrzahl von Medien herstellerseitig vorzugsweise sensormodellbezogen empirisch ermittelt und in dem Grenzstandschalter (60) gespeichert werden.

4. Verfahren gemäß einem der vorhergehenden Ansprüche,
**dadurch gekennzeichnet, dass** die Grenzwerte für eine Mehrzahl, wenigstens 4 Medien, bevorzugt wenigstens 10 Medien unterschiedlicher Viskosität, Permittivität oder Leifähigkeit ermittelt werden.

5. Grenzstandschalter (60) mit einem Schwingkreis zur Auswertung einer kapazitiven Messsonde des Grenzstandschalters (60), wobei eine Auswertungseinrichtung vorgesehen ist zur Auswertung von wenigstens zwei Kennwerten des Schwingkreises und/oder deren Änderung, umfassend einen Frequenzkennwert (f) und zumindest einen weiteren Kennwert ermittelt aus zumindest einer der Kenngrößen-Wechselspannungsamplitude, Dämpfung (D), Impedanz (z), Admittanz und Reflexionsdämpfung, wobei die Auswertungseinrichtung derart ausgestaltet ist, dass eine Grenzstandbestimmung durch Ermitteln der Kennwerte und Vergleichen der ermittelten Kennwerte mit herstellerseitig vorgegebenen Grenzwerten in einem wenigstens zweidimensionalen Kennwerteraum erfolgt, wobei eine Bedeckung der Messsonde festgestellt wird, wenn die ermittelten Kennwerte auf einer Seite einer durch die vorgegebenen Grenzwerte definierten Kennlinie liegen und keine Bedeckung festgestellt wird, wenn die ermittelten Kennwerte auf der anderen Seite der Kennlinie liegen,
**dadurch gekennzeichnet, dass** die Grenzwerte als Funktion in geschlossener Form oder als Wertetabelle gespeichert sind.

6. Grenzstandschalter (60) gemäß Anspruch 5,
**dadurch gekennzeichnet, dass** der Schwingkreis derart ausgelegt ist, dass er mit wenigstens 1 MHz bevorzugt wenigstens 10 MHz, weiter bevorzugt wenigstens 100 MHz, schwingt.

7. Grenzstandschalter (60) gemäß Anspruch 7,
**dadurch gekennzeichnet, dass** die Auswertungseinrichtung so ausgestaltet ist, dass wenigstens ein Frequenzkennwert (f), und ein vorzugsweise frequenzabhängiger Impedanzkennwert (z) ausgewertet werden.

## Claims

1. A method for the limit level determination in a plurality of different media with a limit level switch (60) with an electrical resonant circuit for evaluating a capacitive measuring probe of the limit level switch (60), wherein at least one frequency characteristic of the resonant circuit and/or its change and at least one further characteristic, which is determined from at least one of the characteristic quantities alternating-voltage amplitude, attenuation ratio (D), impedance (z), admittance and return loss, are evaluated simultaneously, wherein the evaluation is carried out by determining the characteristics and comparing the determined characteristics with limit values predefined by the manufacturer in an at least two-dimensional characteristics space, wherein the measuring probe is determined to be covered if the determined characteristics lie on one side of a characteristics curve defined by the predefined limit values, and is determined not to be covered if the determined characteristics lie on the other side of the characteristics curve,
**characterized in that**
the limit values are stored as a function in a closed form, preferably as a nonlinear function, or in the form of a table of values, and intermediate values are determined by interpolation.

2. The method according to claim 1,
**characterized in that**
as characteristics, the frequency change (Δf) and the, preferably frequency-dependent, impedance change (Δz) of the resonant circuit are evaluated.

3. The method according to any one of the preceding claims,
**characterized in that**
the limit values for a plurality of media are empirically determined by the manufacturer, preferably on the basis of the sensor model, and stored in the limit level switch (60).

4. The method according to any one of the preceding claims,
**characterized in that**
the limit values are determined for a plurality, at least 4 media, preferably at least 10 media, with different viscosities, permittivities or conductivities.

5. A limit level switch (60) with an electrical resonant circuit for evaluating a capacitive measuring probe of the limit level switch (60), wherein an evaluation device is provided for evaluating at least two characteristics of the resonant circuit and/or their changes, including one frequency characteristic (f) and at least one further characteristic, which is determined from at least one of the characteristic quantities alternating-voltage amplitude, attenuation (D), impedance (z), admittance and return loss, wherein the evaluation device is configured in such a way that a limit level determination is carried out by determining the characteristics and comparing the determined characteristics with limit values predefined by the manufacturer in an at least two-dimensional characteristics space, wherein the measuring probe is determined to be covered if the determined characteristics lie on one side of a characteristics curve defined by the predefined limit values, and is determined not to be covered if the determined characteristics lie on the other side of the characteristics curve,
**characterized in that**
the limit values are stored as a function in a closed form or as a table of values.

6. The limit level switch (60) according to claim 5,
**characterized in that**
the resonant circuit is designed in such a way that it oscillates at at least 1 MHz, preferably at least 10 MHz, more preferably at least 100 MHz.

7. The limit level switch (60) according to claim 7,
**characterized in that**
the evaluation device is configured in such a way that at least one frequency characteristic (f) and a, preferably frequency-dependent, impedance characteristic (z) are evaluated.

## Revendications

1. Procédé de détermination de niveau limite dans une pluralité de milieux différents, comprenant un interrupteur de niveau limite (60) avec un circuit oscillant électrique pour évaluer une sonde de mesure capacitive de l'interrupteur de niveau limite (60), dans lequel au moins une valeur caractéristique de fréquence du circuit oscillant et/ou son changement ainsi qu'au moins une autre valeur caractéristique déterminée à partir d'au moins l'une des valeurs caractéristiques telles que l'amplitude de tension alternative, le degré d'atténuation (D), l'impédance (z), l'admittance et l'atténuation de réflexion sont évalués en même temps, dans lequel l'évaluation est effectuée en déterminant les valeurs caractéristiques et en comparant les valeurs caractéristiques déterminées à des valeurs limites spécifiées par le fabricant, dans un espace de valeurs caractéristiques au moins bidimensionnel, dans lequel une couverture de la sonde de mesure est constatée si les valeurs caractéristiques déterminées se trouvent d'un côté d'une courbe caractéristique définie par les valeurs limites prédéterminées et qu'aucune couverture n'est constatée si les valeurs caractéristiques déterminées se trouvent de l'autre côté de la courbe caractéristique, **caractérisé par le fait que** les valeurs limites sont stockées en tant que fonction sous forme fermée, de préférence en tant que fonction non linéaire, ou sous la forme d'un tableau de valeurs et que des valeurs intermédiaires sont déterminées par interpolation.

2. Procédé selon la revendication 1, **caractérisé par le fait que** le changement de fréquence (Δ_{f}) et le changement d'impédance (Δ_{z}), de préférence dépendant de la fréquence, du circuit oscillant sont évalués en tant que valeurs caractéristiques.

3. Procédé selon l'une quelconque des revendications précédentes, **caractérisé par le fait que** les valeurs limites pour une pluralité de milieux sont déterminées de façon empirique par le fabricant, de préférence par rapport au modèle de capteur, et sont stockées dans l'interrupteur de niveau limite (60).

4. Procédé selon l'une quelconque des revendications précédentes, **caractérisé par le fait que** les valeurs limites sont déterminées pour une pluralité, au moins 4 milieux, de préférence au moins 10 milieux de viscosité, permittivité ou conductivité différentes.

5. Interrupteur de niveau limite (60) comprenant un circuit oscillant pour évaluer une sonde de mesure capacitive de l'interrupteur de niveau limite (60), dans lequel un dispositif d'évaluation est prévu pour évaluer au moins deux valeurs caractéristiques du circuit oscillant et/ou leur changement, comprenant une valeur caractéristique de fréquence (f) et au moins une autre valeur caractéristique déterminée à partir d'au moins l'une des valeurs caractéristiques telles que l'amplitude de tension alternative, l'atténuation (D), l'impédance (z), l'admittance et l'atténuation de réflexion, dans lequel le dispositif d'évaluation est conçu de telle manière qu'une détermination de niveau limite est réalisée en déterminant les valeurs caractéristiques et en comparant les valeurs caractéristiques déterminées à des valeurs limites spécifiées par le fabricant, dans un espace de valeurs caractéristiques au moins bidimensionnel, dans lequel une couverture de la sonde de mesure est constatée si les valeurs caractéristiques déterminées se trouvent d'un côté d'une courbe caractéristique définie par les valeurs limites prédéterminées et qu'aucune couverture n'est constatée si les valeurs caractéristiques déterminées se trouvent de l'autre côté de la courbe caractéristique, **caractérisé par le fait que** les valeurs limites sont stockées en tant que fonction sous forme fermée ou en tant que tableau de valeurs.

6. Interrupteur de niveau limite (60) selon la revendication 5, **caractérisé par le fait que** le circuit oscillant est conçu de telle sorte qu'il oscille à au moins 1 MHz, de préférence à au moins 10 MHz, encore de préférence à au moins 100 MHz.

7. Interrupteur de niveau limite (60) selon la revendication 7, **caractérisé par le fait que** le dispositif d'évaluation est conçu de telle sorte qu'au moins une valeur caractéristique de fréquence (f) et une valeur caractéristique d'impédance (z), de préférence dépendant de la fréquence, sont évaluées.
